# EUROPÄISCHE PATENTANMELDUNG

(11) **EP 0 955 777 A1**
(43) Veröffentlichungstag der Anmeldung: **10.11.1999**
(21) Anmeldenummer: 98250151.2
(22) Anmeldetag: 05.05.1998
(51) Int. Cl.: H04N 7/16

(54) **Nutzung und Bezahlung von Hörfunk- und Fernsehempfang mittels Gebührenkarte**

(71) Anmelder: Nörenberg, Günther, 29328 Fassberg (DE)
(72) Erfinder: Nörenberg, Günther, 29328 Fassberg (DE)

(57) **Zusammenfassung**

Technisch werden Rundfunkempfangsgeräte (z.B. Radios, Fernseher und Decoder) für unverschlüsselten oder verschlüsselten, analogen oder digitalen Hörfunk- und Fernsehempfang, mit einem Gebührenkartenschlitz und der notwendigen Gebührenkartenlesetechnik, und - wenn nicht vorhanden - mit einem Anzeigedisplay für Gebührenkartenrestguthaben, ausgestattet.

Dieses Angebot ermöglicht einen zeitlich flexiblen, z.B. stundenweisen, Hörfunk-, Fernseh- und Decodersignalempfang mit Hilfe einer Gebührenkarte z.B. der GEZ, bzw. eines Privatsenders. Dem Verbraucher entstehen keine festen monatlichen Fixkosten (Gebühren), weil er keine vertragliche Bindung eingehen muß.

## Beschreibung

### Wirtschaftliches, technisches Gebiet, auf das sich die Erfindung bezieht

Die Erfindung betrifft zum einen den Bereich der Vermarktung von Rundfunkempfang zeitlich flexibel mit Hilfe von Gebührenkarten. Zum anderen die technische Ausstattung von Rundfunkempfangsgeräten mit Gebührenkartenlesetechnik zum Zwecke der Nutzung von Gebührenkarten als Zahlungsmittel für zeitlich flexiblen Hörfunk- und Fernsehempfang.

### Begriffsbestimmungen verwendeter Begriffe:

- 1. Rundfunkempfang:: Schließt Hörfunk- und Fernsehempfang ein.
- 2. Rundfunkempfang unverschlüsselt:: Schließt analoge u. digitale Rundfunksignale ein.
- 3. Rundfunkempfang verschlüsselt: Schließt analoge u. digitale Rundfunksignale ein.
- 4. Rundfunkempfangsgeräte:: Geräte für den Empfang der Rundfunksignale (z.B. Radios, Autoradios, Fernseher, Decoder)
- 5. Gebührenkarte:: Sie ähnelt in ihrer Funktion heutiger Telefonkarten. Ihre Größe entspricht der bekannter Karten (z.B. Eurocheckkarte, Telefonkarte).
- 6. Gebührenkartenlesetechnik:: Sie beinhaltet neben der eigentlichen Gebührenkartenlesetechnik, den Gebührenkartenschlitz und ein Anzeigedisplay für Gebührenkartenrestguthaben, in der Landeswährung.

### Einschlägiger Stand des Marketing mit Fundstellen

a) Die Nutzung des unverschlüsselten Rundfunkempfangs ist heute nach der Entrichtung einer Monatsgebühr ohne zeitliche Begrenzung für einen Monat möglich.
b) Der Empfang von verschlüsselten Fernsehsignalen ist heute in der Regel ebenfalls nach der Entrichtung einer Monatsgebühr, für einen Monat möglich (z.B. Premiere).
c) Mit Hilfe von Telefonkarten wird heute eine zeitlich begrenzte Dienstleistung angeboten. Der zeitliche Umfang der Dienstleistung hängt im wesentlichen vom Verbraucher ab. Er entscheidet, ob er eine Telefonkarte z.B. für 12,- DM oder 30,- DM kauft, und wie oft er mit ihr telefoniert. Darüber hinaus bleibt es dem Verbraucher grundsätzlich selbst überlassen, ob er sich eine Telefonkarte zulegt.

### Einschlägiger Stand der Technik mit Fundstellen

a) Unverschlüsselter Rundfunkempfang ist heute mit handelsüblichen Rundfunkempfängern zeitlich unbegrenzt möglich.
b) Verschlüsselter Fernsehempfang (z.B. Premiere) ist heute mit Hilfe von Decodern (z.B. Premiere-Decodern) zeitlich solange möglich, wie die monatliche Gebühr bezahlt wird.
c) Öffentliche Telefone besitzen heute zu meist eine Gebührenkartenlesetechnik, die es dem Verbraucher ermöglicht mit einer Telefonkarte, zeitlich flexibel Dienstleistungen der Telecom in Anspruch zu nehmen, d.h. ohne vertragliche Bindung kann der Verbraucher kurze oder lange Telefongespräche führen. Der Guthabenbetrag auf der Telefonkarte (Gebührenkarte) wird mit Hilfe eines Anzeigedisplays im Telefongehäuse, in der Landeswährung, angezeigt.
d) Das 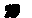 e plus"-Handy ermöglicht das zeitlich begrenzte telefonieren mit einem eingelegten aufladbaren Telefonkartenchip. Dieses Handy verfügt über eine eingebaute Gebührenchiplesetechnik. Der Guthabenbetrag auf dem Chip kann auf Wunsch im Handy-Anzeigedisplay, in der Landeswährung, angezeigt werden. Der 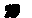 e plus"-Chip wird aus der 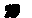 e plus-Gebührenkarte herausgebrochen, und im inneren des Handy-Gehäuses fest eingebaut.
e) Autoradios von Blaupunkt werden heute z.T. mit einer KyeCard gegen Diebstahl gesichert. Diese Karte ermöglicht auch die Speicherung individueller Radioeinstellungen. In der Praxis sieht das so aus, daß zwei Fahrzeugnutzer mit je einer KyeCard unterschiedliche Einstellungen speichern können. Das heißt, diese Radios haben eine eingebaute Kartenlesetechnik, die der Gebührenkartenlesetechnik ähnelt.

### Würdigung des Standes des Marketing

a) Alle Verbraucher, die nur gelegentlich im Beruf z.B. ein Autoradio benutzen wollen z.B. Angehörige der Bundeswehr, Polizei, Zoll, Bundes- und Landesbehörden scheuen die festen monatlichen Kosten und verzichten auf den Hörgenuß.
b) Der überwiegende Teil der Verbraucher, der gerne einen verschlüsselten Fernsehsender (z.B. Premiere) empfangen würde, um ein bis zweimal monatlich einen Spielfilm oder ein Fußballspiel zu sehen, verzichtet auf den Fernsehgenuß, weil ihn die hohen monatlichen Fixkosten (Gebühren) abschrecken.

### Würdigung des Standes der Technik

a) Ein zeitlich unbegrenzter Empfang von, unverschlüsselten Rundfunksignalen ist heute mit Radios und Fernsehern möglich.
b) Ebenso ist der Empfang von verschlüsselten Fernsehsignalen mit Hilfe von Decodern (z.B. Premiere-Decoder) heute möglich.
c) Der Konstruktionsstand der Rundfunkempfänger sieht den Einbau einer Gebührenkartenlesetechnik zum Betrieb dieser Geräte mittels Gebührenkarten, für z.B. stundenweisen Empfang von unverschlüsselten oder verschlüsselten Rundfunksignalen, bis heute noch nicht vor.

### Die Darstellung der Erfindung

Der Einbau einer Gebührenkartenlesetechnik in Radios (primär in Autoradios) und in Decoder (primär private Anbieter, wie z.B. Premiere), mit dem Ziel, dem Verbraucher Hörfunk- und Fernsehempfang flexibel, z.B. stundenweise, anzubieten und zu verkaufen. Dem Verbraucher werden zu diesem Zwecke von der Gebühreneinzugszentrale (GEZ) bzw. von Privatsendern (z.B. Premiere) Rundfunkempfangsgeräte, mit Gebührenkartenlesetechnik, und Gebührenkarten zum Kauf angeboten. Die Gebührenkarten können vom Verbraucher unbegrenzt nachgekauft werden.

### Vorteilhafte Wirkung der Erfindung

Für den Verbraucher
a) Im behördlichen/gewerblichen Bereich könnten z.B. Kraftfahrer die öfter das Kraftfahrzeug wechseln müssen (z.B. Angehörige von Bundeswehr, Zoll, Polizei, Landes-und Bundesbehörden ) den Hörfunk empfangen und mit einer Gebührenkarte der GEZ bezahlen. Die Nutzung von Autoradios in verschiedenen Kraftfahrzeugen an verschiedenen Tagen auch nur z.B. stundenweise wäre möglich. Dies bedeutet für den zuvor genannten Personenkreis, daß sie keine festen monatlichen Gebühren mehr entrichten müßten. Statt dessen kaufen sie sich ein Autoradio, mit Gebührenkartenlesetechnik, zusammen mit einer Gebührenkarte der GEZ, und können künftig flexibel Radio hören bis das Guthaben auf der Gebührenkarte aufgebraucht ist.
b) Viele Verbraucher könnten bei Privatsendern (z.B. Premiere) Spielfilme oder Sportsendungen mit einer Gebührenkarte des Privatsenders z.B. stundenweise empfangen und bezahlen. Die Nutzung des z.B. Premiere-Angebots - auch gelegentlich - an verschiedenen Tagen zu unterschiedlichen Zeiten wäre möglich. Dies bedeutet für den Verbraucher, daß er keine festen monatlichen Gebühren entrichten müßte. Statt dessen kauft er sich eine Gebührenkarte des Privatsenders und deren Decoder, mit Gebührenkartenlesetechnik. Diese Gebührenkarte kann er dann flexibel einsetzen, bis das Guthaben auf dieser Karte aufgebraucht ist.

Für den Anbieter
a) GEZ
   Sie erschließt sich einen potentiell vorhandenen Verbraucherkreis (z.B. Angehörige von Bundeswehr, Zoll, Polizei, Landes- und Bundesbehörden), der im Dienst z.B. Autoradio hören möchte, welchem jedoch heute die zu entrichtenden, monatlichen Gebühren - für eine nur gelegentliche Nutzung - zu hoch sind.
b) Privatsender
   Sie erschließen sich einen großen potentiell vorhandenen Verbraucherkreis, welchem die heutigen, zu entrichtenden monatlichen Gebühren - für eine nur gelegentliche Nutzung - zu hoch sind.

### Für die Wirtschaft

Rundfunkempfangsgeräte mit Gebührenkartenlesetechnik (z.B. Autoradios, Decoder) für die vorhandenen potentiellen Verbraucher müssen erst noch gefertigt werden, sie sind noch nicht auf dem freien Markt verfügbar.

### Beschreibung wenigsten eines Weges zur Ausführung der Erfindung

### Beispiel 1

Der Verkauf von sehr einfach ausgestatteten Autoradios (z.B. Autoradios ohne Cassettenteil) mit Gebührenkartenschlitz, Gebührenkartenlesetechnik und Anzeigedisplay, zusammen mit einer Gebührenkarte der GEZ, würde langfristig den Einbau von solchen Autoradios in alle behördlich/gewerblich genutzten Kraftfahrzeuge zur Folge haben. Die Verkaufsstrategie könnte vergleichbar der von Handys z.B. 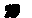 e plus" Free & Easy Card sein, d.h. keine feste Vertragbindung, das Autoradio würde zusammen mit einer Gebührenkarte im Wert von z.B. 50,- DM angeboten. Diese Gebührenkarte für 50,- DM würde z.B. den Genuß von z.B. 500 Stunden Hörfunk ermöglichen. Anfängliche rote Zahlen in der Bilanz der GEZ würden sich spätestens nach ein bis zwei Jahren in schwarze Zahlen umwandeln. Der Erwerb weiterer Gebührenkarten durch den Verbraucher, wird als sicher angenommen.

### Beispiel 2

Der Verkauf von z.B. Premiere-Decodern mit Gebührenkartenlesetechnik (incl. Gebührenkartenschlitz und Anzeigedisplay) zusammen mit einer Gebührenkarte vom Premiere-Anbieter im Wert von z.B. 50,- DM, ohne feste Vertragsbindung, würde langfristig zur Folge haben, daß sich nahezu jeder Fernsehbesitzer einen Premiere-Decoder kaufen würde. Diese Gebührenkarte für 50,- DM würde z.B. den Fernsehgenuß von 50 Stunden Premiere ermöglichen, dies wäre ausreichend für z.B. 25 Spielfilme/ Sportübertragungen. Der Erwerb weiterer Gebührenkarten durch den Verbraucher, wird als sicher angenommen.

## Patentansprüche

1. Ich erhebe einen Patentanspruch auf den Vertrieb von Gebührenkarten als Zahlungsmittel für den unverschlüsselten oder verschlüsselten, analogen oder digitalen Hörfunk-, Fernseh- und Decodersignalempfang.

2. Ich erhebe zweitens einen Patentanspruch auf die Herstellung von Rundfunkempfangsgeräten (z.B. Autoradios, Radios, Fernseher, Decoder) zum Empfang von unverschlüsselten oder verschlüsselten, analogen oder digitalen Hörfunk-, Fernseh-und Decodersignalen, mit Gebührenkartenlesetechnik, Gebührenkartenschlitz und Anzeigedisplay, für Gebührenkartenrestguthaben.
